# EUROPEAN PATENT SPECIFICATION

(11) **EP 4 240 182 B1**
(45) Date of publication and mention of the grant of the patent: **18.02.2026**
(21) Application number: 21801504.8
(22) Date of filing: 27.10.2021
(51) Int. Cl.: A24F 40/00, A24F 40/40, A24F 40/57

(54) **AEROSOL GENERATION DEVICE WITH HEAT DISSIPATION HOUSING**
AEROSOLERZEUGUNGSVORRICHTUNG MIT WÄRMEABLEITUNGSGEHÄUSE
DISPOSITIF DE GÉNÉRATION D'AÉROSOL COMPORTANT UN BOITIER DE DISSIPATION DE CHALEUR

(30) Priority: 06.11.2020 EP 20206151
(43) Date of publication of application: 13.09.2023
(73) Proprietor: JT International SA, 1202 Geneva (CH)
(72) Inventor: YAMAGUCHI, Akira, 1207 Geneva (CH)
(74) Representative: Bardehle Pagenberg Partnerschaft mbB Patentanwälte Rechtsanwälte
(86) International application number: PCT/EP2021/079803
(87) International publication number: WO 2022/096339

(56) References cited:
- WO-A1-2019/042143
- WO-A1-2020/074601
- US-A1- 2014 182 608
- US-A1- 2015 181 936
- LUO J: "Aerosol generating device for aerosol generating product, has heat insulating part for heating aerosol substrate to form air and evaporate, and nozzle component passes through piercing positions of first and second sealing pieces", WPI / 2017 CLARIVATE ANALYTICS,, vol. 2018, no. 55, 24 July 2018 (2018-07-24), XP002802614
- DATABASE WPI Week 201855, Derwent World Patents Index; AN 2018-59602C, XP002802614

## Description

### FIELD OF INVENTION

The present invention relates to an aerosol generation device, in particular an aerosol generation device comprising a cover element with a heat dissipation material.

### TECHNICAL BACKGROUND

Aerosol generation devices commonly found on the market comprise an aerosol generation unit for generating an aerosol for consumption by a user of the aerosol generation device. The aerosol generation unit typically comprises a heating unit that generates an aerosol by applying heat to an aerosol generation substrate. While a part of the heat generated by the heating unit in the process of generating the aerosol is dissipated through the aerosol and the airflow that transports the aerosol to the user for inhalation, a substantial part of the generated heat is transmitted to the surroundings of the heating unit within the aerosol generation device and subsequently dissipated through the device housing of the aerosol generation device to the outside. Furthermore, the outer surface of the aerosol generation device, in particular portions that are proximate to the heating unit, can also become hot. As a consequence, the device housing may become too hot to comfortably hold or touch and may cause injuries to the user.

WO 2020/074601 A1 relates to an aerosol generation device and to insulation for a heating chamber therefor.

US 2014/182608 A1 relates to heating smokable material.

US 2015/181936 A1 relates to apparatus for heating smokeable material.

To address the above issues, some aerosol generation devices provide a thermally insulating element such as thermally insulating sleeve or wrapper. The thermally insulating element commonly encloses or wraps around at least the heating unit to reduce thermal transfer of heat from the heating unit to the outer surface of the device housing. However, the thermally insulating element increases the overall size of the aerosol generation device and needs to conform to spatial requirements posed by the inner space of the aerosol generation device occupied by a plurality of components of the aerosol generation device. This increases the manufacturing complexity and drives up manufacturing costs.

Therefore, there is a need for an aerosol generation device with a thermally insulated unit that is durable, in small size and cost-efficient to manufacture and is able to dissipate the heat from the heating unit.

### SUMMARY OF THE INVENTION

Some, or all of the above objectives are achieved by the invention as defined by the features of the independent claims. Preferred embodiments of the invention are defined by the features of the dependent claims.

The invention is defined by the claims, and the embodiments described herein are provided by way of example only.

A 1^{st} aspect of the invention is an aerosol generation device comprising:
- a heating unit for heating an aerosol generation substrate for generating an aerosol; and
- a device housing which forms at least a part of the exterior surface of the aerosol generation device;
wherein the device housing comprises a layer of plastic (310, 312) arranged as the outmost layer of the device, and an aerogel layer (311), which comprises and/or is made of an aerogel material, configured to insulate the heating unit and dissipate heat generated by the heating unit wherein a side of the aerogel layer (311) is arranged to be directly attached on the layer of plastic (310, 312).

Having the aerogel material in the device housing can make the device housing thinner than having other thermal insulation material, with at least the same thermal insulation performance. Thereby it reduces the size and/or expands the inner space of the device. Instead of arranging the aerogel inside the device, having the aerogel material in the device housing also increases the space for heat dissipation in the device. Furthermore, the solid aerogel can make the device lightweight and easy to manufacture; and with the plastic layer, the aerogel layer is more hard and thus hard to be damaged or scratched, so that the life of the aerogel is prolonged.

According to a 2nd aspect, in the preceding aspect, the aerogel material has a density of 0.10-0.15 g/cm³, preferably 0.11-0.12 g/cm³.

Having the configuration of the 2nd aspect, the aerogel material can be of a stable and solid state.

According to a 3rd aspect, in any one of the preceding aspects, the aerogel layer (311) has the shape of a sheet or a film,

According to a 4th aspect, in any one of the preceding aspects, the device housing (200, 300) comprises another layer of plastic (310, 312) arranged to be directly, and preferably completely, attached on another side of the aerogel layer (311) in way that the aerogel layer (311) is sandwiched between the two plastic layers.

According to a 5^{th} aspect, in any one of the preceding aspects, the layer of plastic is a transparent plastic (312) and the other layer (310) of plastic is a non-transparent plastic.

According to a 6^{th} aspect, in any one of the preceding aspects, one surface of the aerogel layer (311) is completely attached to a surface of the layer of plastic (310, 312).

According to a 7^{th} aspect, in any one of the preceding aspects, the aerogel layer has the shape of a sheet or a film.

According to an 8^{th} aspect, in any one of the preceding aspects, the aerogel layer does not comprise or is not made of aerogel powder.

The 7^{th} and 8^{th} aspects are advantageous because unlike aerogel powder, aerogel, in particular in the form of a sheet or film makes the material transparent, more compact and easy to form a predetermined shape.

According to a 9^{th} aspect, in any one of the preceding aspects, the aerogel layer is in the form of a granule.

According to a 10^{th} aspect, in any one of in the preceding aspects, the device housing comprises a first layer of preferably non-transparent plastic.

According to an 11^{th} aspect, in the preceding aspect, the non-transparent plastic layer is a decorative layer having a printed pattern, configured to show the position and/or the function of a user operation portion and/or other information about the aerosol generation device, and/or the decorative layer is an IDF (in-decoration film) colored plastic, a OMR (out-side transfer) colored plastic, or a NCVM (non-conductive vacuum metallization) colored plastic.

The 10^{th} aspect and the 11^{th} aspect are advantageous because with the transparent performance of the aerogel film and sheet, the aerogel material can be applied on a plastic which has decorative elements such as patterns or prints etc.

According to an 12^{th} aspect, in the 11^{th} and 10^{th} aspects, the aerogel layer is configured above the first layer of plastic.

According to a 13^{th} aspect, in any one of the preceding aspects, the aerogel layer is configured underneath the first layer of plastic.

The 12^{th} and 13^{th} aspects are advantageous because a plastic substance can harden and support the aerogel layer.

According to a 14^{th} aspect, in any one of in the 10^{th} to 13^{th} aspects, the device housing comprises a second layer of preferably transparent plastic, being the outermost layer of the device housing, wherein the aerogel layer is configured between the first layer of plastic and the second layer of plastic.

The 14^{h} aspect is advantageous because arranging another transparent plastic above the aerogel and the non-transparent plastic prevents the aerogel and the non-transparent plastic from damages such as scratch, color fading caused by UV light etc.

According to an 15^{th} aspect, in any one of in the preceding aspects, the aerogel layer is thicker in at least one portion of the housing that is adjacent to the heating unit than in other portions of the housing that are not adjacent to the heating unit.

The 15^{th} aspect is advantageous because this arrangement can make the device housing have a constant tactile temperature through its device housing and use less aerogel material.

According to a 16^{th} aspect, in any one of in the preceding aspects, the aerogel layer has an average thickness of at least 0.2 mm, preferably at least 0.4 mm, more preferably at least 0.5 mm, most preferably at least 0.6 mm, and at most 1.2 mm, more preferably at most 1.0 mm, even more preferably at most 0.8 mm, and most preferably at most 0.7 mm.

According to a 17^{th} aspect, in any one of in the preceding aspects, the aerogel layer has a bending strength of at least 0.025 MPa, preferably at least 0.05 MPa, more preferably at least 0.1 MPa, most preferably at least 0.15 MPa, and at most 0. 45 MPa, more preferably at most 0.4 MPa, even more preferably at most 0.3 MPa, and most preferably at most 0.25 MPa.

With the thickness and bending strength of 16^{th} and 17^{th} aspects, the aerogel layer is thin and can easily shape different forms.

According to a 18^{th} aspect, in any one of the preceding aspects, the aerogel material has a thermal conductivity of at least 0.010 W/m · K, preferably at least 0.011 W/m · K, more preferably at least 0.012 W/m · K, most preferably at least 0.013 W/m · K, and at most 0.017 W/m · K, more preferably at most 0.016 W/m · K, even more preferably at most 0.015 W/m · K, and most preferably at most 0.014 W/m · K.

The aerogel layer according to the 18th aspect possesses excellent thermally insulation properties to provide excellent thermal insulation and heat dissipation performance.

According to a 19th aspect, in any one of the preceding aspects, the aerogel material has a visible light transmission of at least at 92% at 800 nm, preferably at least 93% at 800 nm, more preferably at least 94% at 800 nm, most preferably at least 95% at 800 nm, and at most 99% at 800 nm, more preferably at most 98% at 800 nm, even more preferably at most 97% at 800 nm, and most preferably at most 96% at 800 nm.

The transparency of the aerogel material according to the 19th aspect makes it possible to be arranged on surfaces with colors, patterns, and lights. The aerogel material having the above light transmittance can have a high entire visible light range and be stable in its form.

According to a 20th aspect, in any one of the preceding aspects, the aerogel material has a water contact angle with super water repellency of at least at 125°, preferably at least 130°, more preferably at least 135°, most preferably at least 140°, and at most 160°, more preferably at most 155°, even more preferably at most 150°, and most preferably at most 145°.

With the hydrophobic or water repellent characteristic of the aerogel material according to the 16^{th} aspect, the performance or thermal insulation property thereof remains even when there is vapor within the device caused by heating.

According to a 21st aspect, in any one of the preceding aspects, the device housing comprises a main body, and a cover element which is detachably attached or connected to the main body, and the cover element comprises the aerogel material.

According to an 22nd aspect, in any one of the preceding aspects, the aerogel material is arranged substantially in the entire device housing.

According to a 23rd aspect, in any one of the preceding aspects, the cover element has a curvature so that when the device is in use, the heat from the heating unit can be dissipated into multiple directions.

With the structure of the 24^{th} aspect, the aerogel layer dissipates heat from the heating unit more effectively, and the surface temperature of the entire device is maintained to be consistent.

According to a 25^{th} aspect, in any one of the preceding aspects, the aerogel material has a density of 0.10-0.15 g/cm³, preferably 0.11-0.12 g/cm³.

With the density of the 25^{th} aspect, the aerogel material has a relatively high heat dissipation performance, and thermal conductivity as small as 0.01 W / m · K or less, while it remains in a solid form and is hard to crack so that it can be stably fixed to the plastic layer. In addition to this, the aerogel composite material with this density can be used also for water repellency, sound absorption, static vibration, catalyst support, and the like.

According to a 26^{th} aspect, in any one of the preceding aspects, the aerogel material has a compressive strength of 8-10 MPa, preferably 8.5-9.5 MPa, more preferably 9.1-9.5 MPa, most preferably 9.2-9.25 MPa, and/or a compression modulus of 0.5-1 MPa, preferably 0.6-0.9 MPa, more preferably 0.7-0.75 MPa.

According to a 27^{th} aspect, in any one of the preceding aspects, the aerogel material has an average pore diameter of 20-100nm, preferably 30-90 nm, more preferably 40-80 nm, most preferably 50-70 nm.

According to a 28^{th} aspect, in any one of the preceding aspects, the aerogel material has a refractive index of 1.02 to 1.08, preferably 1.03 to 1.07, more preferably 1.04 to 1.06.

According to a 29th aspect, in any one of the preceding aspects, the aerogel material has a dielectric constant of 1.05 to 1.15, preferably 1.08 to 1.12, more preferably 1.09 to 1.11.

According to a 30th aspect, in any one of the preceding aspects, the aerogel material has a heat resistant temperature up to 550°C, preferably 600 °C , more preferably up to 615 °C, most preferably up to 630 °C in Nitrogen atmosphere, and up to 350 °C, preferably 400 °C , more preferably up to 450 °C, most preferably up to 467 °C in air atmosphere.

According to a 31st aspect, in any one of the preceding aspects, the aerogel material has a coefficient of thermal expansion of 62×10⁻⁶ to 66×10⁻⁶/K, preferably 63×10⁻⁶ to 65×10⁻⁶/K, more preferably 63.5×10⁻⁶ to 64.5×10⁻⁶/K.

A 32^{nd} aspect of the invention is a manufacturing method of a device housing for an aerosol generation device according to any one of 2^{nd} to 33^{rd} aspects, comprising a heating unit for heating an aerosol generation substrate for generating an aerosol, the method comprising the steps of
- attaching the aerogel layer to a plastic layer by gluing, in-mold-decorating, or out-mold decorating; or
- fixing the aerogel layer between two plastic layers.

With the manufacturing method according to the 34^{th} aspect, the aerogel layer is easy to form in shape and fix with the plastic layers.

According to a 33rd aspect, in the preceding aspect, the aerogel layer is in solid state.

According to a 34^{th} aspect, in the preceding aspects 32^{nd} or 33^{rd}, one surface of the aerogel layer (311) is completely attached to a surface of the layer of plastic (310, 312).

According to a 35^{th} aspect, in the preceding aspects 32^{nd}, 33^{rd} or 34^{th}, the method further comprises a step of:
- obtaining the aerogel layer (311), which comprises and preferably made of the aerogel material with a density of 0.10-0.15 g/cm³, preferably 0.11-0.12 g/cm³.

Preferred embodiments are now described, by way of example only, with reference to the accompanying drawings.

### BRIEF DESCRIPTION OF THE DRAWINGS

Figs. 1A and 1B respectively show schematic illustrations of a side-view and a top-view of an aerosol generation device, according to embodiments of the invention;
Figs. 2A and 2B respectively show schematic illustrations of cross sections of a part of the cover element of the aerosol generation device, according to embodiments of the invention.

### DETAILED DESCRIPTION OF PREFERRED EMBODIMENTS

In the description of the present invention, it should be understood that the terms "one end", "the other end", "outer side", "upper", "above", "inner side", "under", "below", "horizontal", "coaxial", "central", "end" "part", "length", "outer end" etc., which indicate the orientation or positional relationship , are based on the orientation or positional relationship shown in the drawings. The terms such as "upper", "above", "below", "under" and the like used in the present invention to indicate a relative position in space are used for the purpose of facilitating explanation to describe a unit or feature shown in the drawings relative to the relationship of another unit or feature. The term of the relative position in space may be intended to include different orientations of the device in use or operation other than those shown in the figures. For example, if the device in the figure is turned over, the unit described as being "below" or "under" other units or features will be "above" the other units or features. Therefore, the exemplary term "below" can encompass both the above and below orientations. The device can be oriented in other ways (rotated by 90 degrees or other orientations), and the space-related descriptors used herein are explained accordingly. More specifically, the word "above" means that one unit, layer or element is arranged or configured relatively in an exterior direction of the device towards the (an)other unit(s), layer(s) or element(s); the word "below" means that one unit, layer or element is arranged or configured relatively in an interior direction of the device towards the other units, layers or elements.

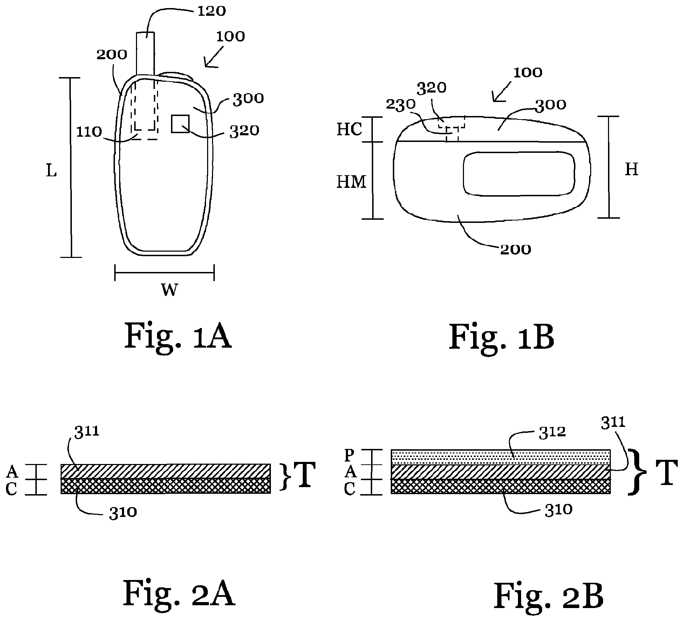

As shown in **Figs. 1A** and **1B**, the aerosol generation device 100 comprises a device housing comprising a main housing 200 and an optional cover element 300. The main housing 200 is configured to accommodate an aerosol generation unit for generating an aerosol for consumption by a user. The aerosol generation unit comprises a heating unit 110 that is configured for heating a consumable 120 comprising an aerosol generation substrate. The aerosol generation device 100 also comprises a power supply that may be a replaceable and/or rechargeable power supply, and may additionally be provided with a USB port functioning as a charging port for charging the rechargeable power supply or a data transmission line, and an operator/CPU. The power supply may be a battery that may be provided with a battery vent and a battery vent cover. The cover element 300 may be detachably attached to the main housing 200. The cover element being detachable means that the cover element 300 is detachable from the main housing by a user of the aerosol generation device 100 without requiring any additional tools or aids, such that it can be detached by the user utilizing one or both hands. As an alternative, the cover element may not be detachable and may be integrally formed with the main housing.

The aerosol generation device 100 may have an elongated shape to improve the comfort of a user when holding the aerosol generation device 100. The longitudinal direction of the aerosol generation device 100 is the direction in which the aerosol generation device 100 is elongated.

As shown in Fig. 1A, in case a cover element 300 is provided, an operation interface portion (not shown) may be provided at a portion of the main housing 200 that is covered by the cover element 300. The operation interface portion is protected from outside influences by the cover element 300, and like the user operation portion 320, can be actuated by a user for providing an operation input to the aerosol generation device 100. The operation interface portion comprises one or more operation input elements 230 such as a mechanical or capacitive touch button or switch, an optical sensor, or a magnetic sensor. In a preferred configuration shown in Fig. 1B, the user operation portion 320 and the operation interface portion may be configured such that actuating the user operation portion 320 actuates the operation interface portion for providing an operation input to the aerosol generation device 100. In this case, actuating the user operation portion 320 alone may not provide any operation input to the aerosol generation device 100. Rather, the resulting actuation of the operation interface portion caused by the actuation of the user operation portion 320 results in an operation input. For example, the user operation portion 320 may comprise a mechanical button or switch that can be pressed or moved by a user. The mechanical button or switch 320 actuates an operation input element 230 of the operation interface portion by having a protrusion or similar arrangement protruding towards the operation input element of the operation interface portion such as a button or switch 230. When the button or switch of the user operation area 320 is pressed, the protrusion causes the button or switch of the operation interface portion to be pressed. Additionally, or alternatively, the user operation portion 320 may be provided with a magnetic detection object such as a magnet or ferromagnetic object, or an optical detection object such as reflective surface, that can respectively actuate a magnetic sensor or an optical sensor provided as an operation input element 230 of the operation interface portion when the button or switch 330 is actuated. Alternatively, instead of a mechanical button or switch, the user operation portion 320 may comprise a flexible area that can be flexibly deformed towards the operation interface portion when pressed by a user to actuate an operation input element 230 of the operation interface portion. Such configurations allow a user to actuate the operation interface portion for providing an operation input to aerosol generation device 100 from outside the aerosol generation device by actuating the user operation area 320 without directly accessing or exposing the operation interface portion covered by the cover element 300.

The aerosol generation device 100 may be an electronic cigarette and may be configured to generate an aerosol from an e-vapor or t-vapor aerosol generation substrate. For example, the heating unit 110 may comprise a receptacle configured for receiving a tobacco stick or similar consumable 120, and a heating element may be configured for heating the receptacle and the tobacco stick received in the receptacle. Alternatively, the receptacle may be configured for receiving a cartridge containing an aerosol generation substrate such as a liquid, and the heating unit 110 may comprise a wicking element and a heating element configured for heating the wicking element. Depending on the aerosol generation substrate, the heating unit may heat the aerosol generation substrate to temperatures up to 350°C for generating an aerosol. The aerosol generation device comprises an airflow path that extends from an air inlet via the aerosol generation unit to an air outlet. When a user consumes a consumable by inhaling a generated aerosol, air enters the air inlet, passes to the aerosol generation unit where an aerosol is generated by the heating unit by heating the aerosol generation substrate, and transports the generated aerosol to the air outlet such as a mouthpiece. While the airflow path is in communication with the aerosol generation unit, the airflow path is typically not in communication with the remaining interior space of the aerosol generation. A portion of the heat generated by the heating unit 110 is transferred to the aerosol generation substrate for generating an aerosol and to the flow of air that transports the generated aerosol to a user for inhalation. However, a remaining and substantial portion of the generated heat is transferred to the interior space of the aerosol generation device that is not in communication with the airflow path and the aerosol generation unit. This substantial portion of the generated heat is subsequently dissipated over time through heat conduction and heat radiation to the outer surface of the aerosol generation device and subsequently to the ambient air. Since this heat does not serve to heat the aerosol generation substrate, this heat corresponds to lost heat that is lost to the interior space of the aerosol generation device in surrounding of the heating unit 110 that is not in communication with the heating unit 110. The heat, hence, may increase the temperature of the outer main housing 200 in case of consecutive vaping, and the device 100 may not be usable until the temperature back to normal. There is a need to prevent consumers and the device body from hotness caused by heat coming from heater.

To address this problem, the device housing comprises an aerogel material. Instead of arranging further insulation units inside the aerosol generation device 100, providing an aerogel material in the device housing makes the aerosol generation device 100 compact and have a better thermal insulation performance.

In some embodiments, the aerogel material is aerogel powder filled in the cover element 300, together with other thermal insulation material such as diatomaceous earth powder, zirconia powder etc.

In some of the preferred embodiments of the present invention, an aerogel sheet and/or aerogel film are used. Preferably the monolith type (sheet-like aerogel and film-like aerogel), which has a block shape, e.g. Super Functional Air (SUFA) developed by Tiem factory Inc., is used. In other preferred embodiments of the present invention, an aerogel granule is used (granule-like aerogel) as Super Functional Air (SUFA) developed by Tiem factory Inc. The manufacturing method, the properties and statistics of SUFA from Tiem factory Inc. are disclosed in WO2020166302A1 (TIEM FACTORY INC [JP]; AIZAWA MAMORU; UEGAKI AI).

In some embodiments, the aerogel material is obtainable by a sol generation step for generating a sol by adding a silicon compound to an aqueous solution containing an acid catalyst, and performing hydrolysis, namely hydrolyzing it, to generate a sol, wherein the silicon compound comprises a quadri-functional silane compound and a tri-functional silane compound, and preferably further comprises a bi-functional silane compound, and more preferably, the silicon compound is a mixture of a quadri-functional silane compound, a tri-functional silane compound, and a bi-functional silane compound having portions satisfying 0 < Qx < 50, 50 ≤ Tx < 100, 0 ≤ Dx < 30, and Qx + Tx + Dx = 100, where Qx, Tx, and Dx represent the mass percentages of the quadri-functional silane compound, the tri-functional silane compound, and the bi-functional silane compound, respectively.

With this composition, the aerogel material may have an improved heat insulating property, and in addition, may be used to produce a plate-shape or film-shape having a large area of 400 cm² or more, which makes it possible to be mass produced.

In some embodiments, when the structure of the aerogel of the present invention is observed microscopically, it mainly comprises a bulk portion (skeleton portion) filled with solid matter, and pore portions, which penetrates into the bulk portion in a three-dimensional network shape.

The bulk portion is composed of a continuum in which solids form a three-dimensional network by siloxane bonds. In the three-dimensional network, when the lattice, which is the minimum unit of the network, is approximated by a cube, the average length of one side thereof is 2 nm or more and 25 nm or less. The average length of one side is preferably 2 nm or more, 5 nm or more, 7 nm or more, 10 nm or more, and 25 nm or less, 20 nm or less, and 15 nm or less.

Further, the pore portion has a tubular shape penetrating the inside of the bulk portion, and the pore is approximated by a tube, and the average inner diameter when the inner diameter of the tube is approximated by a circle is 5 nm or more and 100 nm or less. The average inner diameter of the pores is preferably 5 nm or more, 7 nm or more, 10 nm or more, 20 nm or more, 30 nm or more, 50 nm or more, and 100 nm or less, 90 nm or less, 80 nm or less, 70 nm or less. Here, the inner diameter of the tube is smaller than the mean free path (MFP) of the element molecules constituting the air at atmospheric pressure.

Further, the porosity of the aerogel, that is, the ratio of the volume of the pores to the total volume of the aerogel is 70% or more. As an example of the porosity, it may be 75% or more, 80% or more, 85% or more, 90% or more.

In other embodiments, as long as the other physical properties of the aerogel are met, the aerogel of the present invention may also include a structure other than the bulk part and the pore portions. As an example, voids different from the above-mentioned pores may be included. In addition, as yet another example, it may comprise, except water, organic solvent, surfactant, catalyst, and decomposition products thereof.

In the embodiment of Fig 1A and 1B., the cover element 300 comprises an aerogel layer, preferably in a solid state, more preferably an aerogel sheet and/or aerogel film, which is solidified from the aerogel material during manufactory. With the aerogel layer, the cover element 300 is able to reduce heat up of the exterior surface of the aerosol generation device 100 by the lost heat from the heating unit 110 to prevent a user from being injured by the heat while touching the cover element 300 for using the user operation portion 320.

The cover element 300 may have a central portion that is substantially planar, and one or more peripheral or circumferential portions that are curved or bent to allow the cover element 300 to be adjoined to the main housing 200 with a space arranged or enclosed between the main housing 200 and the cover element 300 within which one or more operation input elements 230 may be arranged. Alternatively, the cover element 300 may have a continuously curved shape with a central portion having a curvature that is smaller than the curvature of one or more peripheral or circumferential portions. The aerogel layer of this invention is flexible and easy to form the above shape, thanks to the certain level of bending strength the aerogel film and sheet has. The bending strength of the aerogel film and sheet of this invention is at least 0.025 MPa, preferably at least 0.05 MPa, more preferably at least 0.1 MPa, most preferably at least 0.15 MPa, and at most 0.45 MPa, more preferably at most 0.4 MPa, even more preferably at most 0.3 MPa, and most preferably at most 0.25 MPa. The density of the aerogel layer is 0.10-0.15 g/cm³, preferably 0.11-0.12g/cm³. With this arrangement, especially the density, as shown, the aerogel material can be in a stable and solid state, and can be mass produced. As the density of aerogel decreases, the thermal conductivity decreases, and the heat insulating property improves accordingly. With a density of 0.15 g / cm3 or less, the thermal conductivity thereof can be as small as 0.01 W / m · K or less. The aerogel material with this density is obtained by the mercury porosimetry method, also known as mercury intrusion method, during manufactory. The aerogel layer has a compressive strength of 8-10 MPa, preferably 8.5-9.5 MPa, more preferably 9.1-9.5 MPa, most preferably 9.2-9.25 MPa, and a compression modulus of 0.5-1 MPa, preferably 0.6-0.9 MPa, more preferably 0.7-0.75 MPa. With the combination of the aerogel layer and the curved shape of the cover element 300, the thermal insulation and dissipation performance is substantially increased, because the heat is dissipated in multiple directions. With this structure, the aerogel layer 311 dissipates heat from the heating unit more effectively, and the surface temperature of at least the cover element is maintained to be consistent. In one embodiment of the present invention, the aerogel layer is thicker in at least one portion of the housing that is adjacent to the heating unit than in other portions of the housing that are not adjacent to the heating unit. More specifically, the central portion has a thicker aerogel layer than the peripheral or circumferential portions. This arrangement can make the device housing have a constant tactile or surface temperature through its cover element and use less aerogel material.

The aerogel layer also reduces the thickness of the insulator applied to the heating unit 110, so as to reduce the general size and increase the inner space of the aerosol generation device 100. The aerogel sheet or film 311 can bring out almost the same performance, while only having half or even just one-third of the thickness of most of the traditional thermal insulation material, such as PEEK and copper. More specifically, the aerogel layer used in the present invention has an average thickness of at least 0.05 mm, preferably at least 0.1 mm, more preferably at least 0.3 mm, most preferably at least 0.5 mm, and at most 1.2 mm, more preferably at most 1.0 mm, even more preferably at most 0.8 mm, and most preferably at most 0.6 mm. The thermal conductivity thereof is at least 0.010 W/m · K, preferably at least 0.011 W/m · K, more preferably at least 0.012 W/m · K, most preferably at least 0.013 W/m · K, and at most 0.017 W/m · K, more preferably at most 0.016 W/m · K, even more preferably at most 0.015 W/m · K, and most preferably at most 0.014 W/m · K. The average pore diameter of the aerogel layer is 20-100nm, preferably 30-90 nm, more preferably 40-80 nm, most preferably 50-70 nm. The dielectric constant thereof is 1.05 to 1.15, preferably 1.08 to 1.12, more preferably 1.09 to 1.11. The heat resistant temperature is up to 550 °C, preferably 600 °C , more preferably up to 615 °C, most preferably up to 630 °C in Nitrogen atmosphere, and up to 350 °C, preferably 400 °C , more preferably up to 450 °C, most preferably up to 467 °C in air atmosphere. The coefficient of thermal expansion is 62×10⁻⁶ to 66×10⁻⁶/K, preferably 63×10⁻⁶ to 65×10⁻⁶/K, more preferably 63.5×10⁻⁶ to 64.5×10⁻⁶/K.

Another benefit of the aerogel layer is that it may be super water repellent. While consuming the aerosol generation substrate such as a liquid, the vaporized liquid may stream into the aerosol generation device 100. In case of other thermal insulation material, the performance on thermal insulation goes down once it absorbs water property. However, with the aerogel layer of this invention, the performance on thermal insulation is maintained thanks to its super water repellency property. More specifically, the aerogel layer of this invention has a water contact angle with super water repellency of at least at 125°, preferably at least 130°, more preferably at least 135°, most preferably at least 140°, and at most 160°, more preferably at most 155°, even more preferably at most 150°, and most preferably at most 145°.

As shown in Fig. 2A, a decorative layer (color layer or ink layer) 310 having a printed pattern showing for example the position and/or the function of the user operation portion 320 and/or other information about the aerosol generation device 100 is provided and configured underneath the aerogel layer 311. In other words, the decorative layer 310 is provided and configured in a more interior position in the device 100 than the aerogel layer 311. The decorative layer is a layer of non-transparent plastic. Thanks to the transparency of the aerogel sheet and film 311, unlike the aerogel powder, the aerogel sheet and film do not cut out the visibility of patterns and color from the decorative layer and the LED indication, which may be configured underneath the cover element 300. So that the aerogel layer 311 is the outermost layer. The visible light transmission of the aerogel layer 311 of the present invention is at least at 92% at 800 nm, preferably at least 93% at 800 nm, more preferably at least 94% at 800 nm, most preferably at least 95% at 800 nm, and at most 99% at 800 nm, more preferably at most 98% at 800 nm, even more preferably at most 97% at 800 nm, and most preferably at most 96% at 800 nm. The refractive index thereof is 1.02 to 1.08, preferably 1.03 to 1.07, more preferably 1.04 to 1.06.

As shown in Fig. 2B, in order to prevent the aerogel layer 311 and the decorative layer 310 from any damage such as scratch and color fading of the decorative layer 310 caused by UV light, a transparent plastic layer 312, preferably a plastic plate, is configured thereon. The transparent plastic layer 312 is configured as the outermost layer of the device housing, and the aerogel layer 311 is configured between the transparent plastic layer 312 and the decorative layer 310. Although not shown in the figures, some other layers may be arranged below the transparent plastic layer 312, and those layers are introduced below.

As shown in both Fig. 2A and 2B, the aerogel layer 311 is arranged in a way that it is closely attached, namely clings to or sticks on at least one, preferably two plastic layers. With this arrangement, no condensation would happen inside the device. In other words, one surface of the aerogel layer 311 is completely attached to at least one surface of the layer of plastic 310, 312, and preferably completely attached to one surface of each of the layers of plastic 310, 312.

In order to manufacture the cover element 300, the aerogel material of this invention is applied into the cover element 200 in a way such that the aerogel sheet or film 311 of this invention is closely attached to at least one of the plastic layers. Preferably, the aerogel film or sheet 311 is applied into the cover element 200. Since the aerogel film and sheet is already in shape, unlike the aerogel powder, and due to its flexibility, the manufacture of the cover element 200 is easier and does not demand harsh and complicated manufacturing conditions and environments.

More specifically, the aerogel sheet or film 311 of this invention can be stuck onto the decorative layer 310 by applying a layer of glue onto the decorative layer 310 and then attaching the aerosol sheet or film 311 onto the layer of glue on the decorative layer 310. In other words, the aerogel layer 310 is configured as the outer layer, and the decorative layer is set underneath the aerogel layer 310.

The glue layer has the effect of combining the decorative layer 310, preferably comprising molding plastic, with the aerogel layer 311. The molding plastic can be an IDF (in-decoration film) colored plastic, an OMR (out-side transfer) colored plastic, or an NCVM (non-conductive vacuum metallization) colored plastic etc. The glue layer is preferably made from one selected from the group consisting of acrylic, nitrification fiber, polyamine format, chlorination rubber, vinyl chloride-co-vinyl-acetic ester copolymer, polyamide, polyester, epoxy, polycarbonate, olefin, and acrylonitrile-butylene-styrene monomer resin, for example. The glue layer is generally provided via concave, screen, and offset printing, or spraying, a dip-coating method, or a coating in reverse order method, for example. The decorative layer 310 may comprise a plastic base layer and a print layer. As mentioned above, the decorative layer 310 is used to display patterns and colors, and the decorative layer 310 is formed by coating the plastic base layer with printing ink, which is the print layer.

The thickness of the cover element T is at least 0.75 mm, more preferably 1.0 mm, even more preferably 1.3 mm, most preferably 1.7 mm, and at most 2.8 mm, preferably at most 2.4 mm, most preferably at most 2.1 mm. The thickness of the plastic base layer is at least 0.6 mm, more preferably at least 0.7 mm, even more preferably at least 0.8 mm, most preferably at least 0.9 mm, and at most 1.2 mm, preferably at most 1.1 mm, most preferably at most 1.0 mm. The thickness of the print layer is at least 0.1 mm, more preferably at least 0.15 mm, even more preferably at least 0.2 mm, most preferably at least 0.25 mm, and at most 0.4 mm, preferably at most 0.35 mm, most preferably at most 0.3 mm.

In other embodiment, the aerogel sheet or film 311 can be closely attached to the plastic layer 310 by in-mold-decorating or out-mold decorating. The methods of in-mold-decoration and out-mold-decoration, namely OMR (Out-mold-release), IMR(In-mold-release), OMF (Out-mold-film) and IMF (In-mold-film), are known to the skilled person. The methods are known, for example, from JP 316025, JP 322046, JP 345288, TW I230002, US 7070849, EP 1327510. In general, a film (decorative film or labeling film) is adhered to a plastic object when it is molded. If the base of the film is removed when it is molded, it is an OMR or IMR because it is "released". If the base remains in the mold, it is an OMF or IMF.

To produce the cover element by in-mold-decorating or out-mold decorating, firstly a film is produced, and the film may comprise multiple layers in the order of a base, a first glue layer (or a binder), an aluminum sheet (silver) layer (as an anti-reflection layer or a metal film layer), a second glue layer (or a binder), an aerogel layer of this invention, a second glue layer (or a binder), a print layer or color sheet (red), a third glue layer, and a top coating layer. Secondly, the film is be placed in a cavity of a mold, with the base surface in contact with a surface of the cavity. Thirdly, the resin is injected into the mold to obtain an integrated body of the film and a substrate composed of the resin (the plastic layer). The skilled person would take any one of the above layers as appropriate, such as the aluminum sheet layer, out of the film in order to achieve a thinner product.

In this case, the thickness of the cover element T is at least 0.75 mm, more preferably 1.0 mm, even more preferably 1.3 mm, most preferably 1.7 mm, and at most 2.8 mm, preferably at most 2.4 mm, most preferably at most 2.1 mm. The thickness of the plastic base layer is at least 0.6 mm, more preferably at least 0.7 mm, even more preferably at least 0.8 mm, most preferably at least 0.9 mm, and at most 1.2 mm, preferably at most 1.1 mm, most preferably at most 1.0 mm. The thickness of the print layer or the rest of the film excluding the aerogel layer is at least 0.1 mm, more preferably at least 0.15 mm, even more preferably at least 0.2 mm, most preferably at least 0.25 mm, and at most 0.4 mm, preferably at most 0.35 mm, most preferably at most 0.3 mm.

If there is any concern of the pressure from outside, another transparent substrate composed of the resin (another plastic layer) can be further attached, or in-mold decorated or out-mold decorated on the integrated body, so that a transparent substrate or plastic as the outermost layer or surface of the cover element can protect the aerogel and the colored plastic.

In this case, the thickness of the cover element T is at least 1.35 mm, more preferably 1.0 mm, even more preferably 1.3 mm, most preferably 1.7 mm, and at most 4.0 mm, preferably at most 3.0 mm, most preferably at most 2.1 mm. The thickness of the print layer or the rest of the film excluding the aerogel layer is at least 0.1 mm, more preferably at least 0.15 mm, even more preferably at least 0.2 mm, most preferably at least 0.25 mm, and at most 0.4 mm, preferably at most 0.35 mm, most preferably at most 0.3 mm.

In yet another embodiment, the aerogel layer 311 can be fixed inside or sandwiched or placed between a decorative plastic layer 310 and a transparent plastic layer 312 by a male-female fit with connectors or fasteners such as screws etc. in a way that the aerogel layer 311 can be closely attached to one plastic layer, preferably two plastic layers on different sides of the aerogel layer 311 as shown in **Figs.** 2A and 2B.

In this case, the thickness of the cover element T is at least 0.75 mm, more preferably 1.0 mm, even more preferably 1.3 mm, most preferably 1.7 mm, and at most 2.8 mm, preferably at most 2.4 mm, most preferably at most 2.1 mm.

In an alternative embodiment, the aerogel layer 311 may be configured underneath or rare of the decorative layer 310.

Although in the preceding embodiments, only the cover element 200 is configured with the aerogel material or the aerogel layer 310 arranged throughout its surface area, the aerogel material or the aerogel layer 310 can also be configured in the entire outer housing of the device 100 or any other exterior portions of the device 100, namely arranged throughout the complete surface area of the housing of the device 100.

## Claims

1. An aerosol generation device (100) comprising:
- a heating unit (110) for heating an aerosol generation substrate (120) for generating an aerosol; and
- a device housing (200, 300) which forms at least a part of the exterior surface of the aerosol generation device (100);
wherein the device housing (200, 300) comprises a layer of plastic (310, 312) arranged as the outmost layer of the device, and an aerogel layer (311), which comprises and/or is made of an aerogel material (311), configured to insulate the heating unit (110) and dissipate heat generated by the heating unit (110) wherein a side of the aerogel layer (311) is arranged to be directly attached on the layer of plastic (310, 312).

2. The aerosol generation device (100) according to the preceding claim, wherein the aerogel material has a density of 0.10-0.15 g/cm³, preferably 0.11-0.12 g/cm³.

3. The aerosol generation device (100) according to any one of the preceding claims, wherein the aerogel layer (311) has the shape of a sheet or a film.

4. The aerosol generation device (100) according to any one of claims, wherein the device housing (200, 300) comprises another layer of plastic (310, 312) arranged to be directly attached on another side of the aerogel layer (311) in way that the aerogel layer (311) is sandwiched between the two plastic layers.

5. The aerosol generation device (100) according to the preceding claim, wherein the layer of plastic is a transparent plastic (312) and the other layer (310) of plastic is a non-transparent plastic.

6. The aerosol generation device (100) according to any one of the preceding claims, wherein one surface of the aerogel layer (311) is completely attached to a surface of the layer of plastic (310, 312).

7. The aerosol generation device (100) according to any one of preceding claims, wherein the aerogel layer (311) has an average thickness (A) of at least 0.2 mm, preferably at least 0.4 mm, more preferably at least 0.5 mm, most preferably at least 0.6 mm, and at most 1.2 mm, more preferably at most 1.0 mm, even more preferably at most 0.8 mm, and most preferably at most 0.7 mm.

8. The aerosol generation device (100) according to any one of the preceding claims, wherein the aerogel layer (311) has a bending strength of at least 0.025 MPa, preferably at least 0.05 MPa, more preferably at least 0.1 MPa, most preferably at least 0.15 MPa, and at most 0.45 MPa, more preferably at most 0.4 MPa, even more preferably at most 0.3 MPa, and most preferably at most 0.25 MPa.

9. The aerosol generation device (100) according to any one of the preceding claims, wherein the aerogel material (311) has a thermal conductivity of at least 0.010 W/m · K, preferably at least 0.011 W/m · K, more preferably at least 0.012 W/m · K, most preferably at least 0.013 W/m · K, and at most 0.017 W/m · K, more preferably at most 0.016 W/m · K, even more preferably at most 0.015 W/m · K, and most preferably at most 0.014 W/m · K.

10. The aerosol generation device (100) according to any one of the preceding claims, wherein the aerogel material (311) has a visible light transmission of at least at 92 % at 800 nm, preferably at least 93 % at 800 nm, more preferably at least 94 % at 800 nm, most preferably at least 95 % at 800 nm, and at most 99 % at 800 nm, more preferably at most 98 % at 800 nm, even more preferably at most 97 % at 800 nm, and most preferably at most 96 % at 800 nm.

11. The aerosol generation device (100) according to any one of the preceding claims, wherein the aerogel material (311) has a water contact angle with super water repellency of at least at 125°, preferably at least 130°, more preferably at least 135°, most preferably at least 140°, and at most 160°, more preferably at most 155°, even more preferably at most 150°, and most preferably at most 145°.

12. The aerosol generation device (100) according to any one of the preceding claims, wherein the device housing (200, 300) comprises a main body (200), and a cover element (300) which is detachably attached or connected to the main body (200), and the cover element (300) comprises the aerogel material (311).

13. The aerosol generation device (100) according to the preceding claim, wherein the cover element (300) has a curvature so that when the device is in use, the heat from the heating unit (110) can be dissipated into multiple directions.

14. A manufacturing method of a device housing (300) for an aerosol generation device (100) according to any one of the preceding claims 1 to 13, comprising a heating unit (110) for heating an aerosol generation substrate (120) for generating an aerosol layer, the method comprising step of
- attaching the aerogel layer (311) to a plastic layer (310, 312) by gluing, in-mold decorating, or out-mold decorating; or
- fixing the aerogel layer (311) between two plastic layers with male-female fit.

15. The manufacturing method according to the preceding claim, one surface of the aerogel layer (311) is completely attached to a surface of the layer of plastic (310, 312).

## Patentansprüche

1. Aerosolerzeugungsvorrichtung (100), umfassend:
- eine Heizeinheit (110) zum Erwärmen eines Aerosolerzeugungssubstrats (120) zum Erzeugen eines Aerosols; und
- ein Vorrichtungsgehäuse (200, 300), das mindestens einen Teil der Außenfläche der Aerosolerzeugungsvorrichtung (100) bildet;
wobei das Vorrichtungsgehäuse (200, 300) eine Kunststoffschicht (310, 312), die als äußerste Schicht der Vorrichtung angeordnet ist, und eine Aerogelschicht (311), die ein Aerogelmaterial (311) umfasst und/oder daraus besteht, umfasst, die konfiguriert ist, um die Heizeinheit (110) zu isolieren und durch die Heizeinheit (110) erzeugte Wärme abzuleiten, wobei eine Seite der Aerogelschicht (311) angeordnet ist, um direkt an der Kunststoffschicht (310, 312) befestigt zu sein.

2. Aerosolerzeugungsvorrichtung (100) nach dem vorhergehenden Anspruch, wobei das Aerogelmaterial eine Dichte von 0,10-0,15 g/cm³, vorzugsweise 0,11-0,12 g/cm³, aufweist.

3. Aerosolerzeugungsvorrichtung (100) nach einem der vorhergehenden Ansprüche, wobei die Aerogelschicht (311) die Form einer Folie oder eines Films aufweist.

4. Aerosolerzeugungsvorrichtung (100) nach einem der Ansprüche, wobei das Vorrichtungsgehäuse (200, 300) eine weitere Kunststoffschicht (310, 312) umfasst, die angeordnet ist, um direkt an einer anderen Seite der Aerogelschicht (311) derart befestigt zu sein, dass die Aerogelschicht (311) sandwichartig zwischen den zwei Kunststoffschichten angeordnet ist.

5. Aerosolerzeugungsvorrichtung (100) nach dem vorhergehenden Anspruch, wobei die Kunststoffschicht ein transparenter Kunststoff (312) ist und die andere Kunststoffschicht (310) ein nicht transparenter Kunststoff ist.

6. Aerosolerzeugungsvorrichtung (100) nach einem der vorhergehenden Ansprüche, wobei eine Oberfläche der Aerogelschicht (311) vollständig an einer Oberfläche der Kunststoffschicht (310, 312) befestigt ist.

7. Aerosolerzeugungsvorrichtung (100) nach einem der vorhergehenden Ansprüche, wobei die Aerogelschicht (311) eine durchschnittliche Dicke (A) von mindestens 0,2 mm, vorzugsweise mindestens 0,4 mm, mehr bevorzugt mindestens 0,5 mm, am meisten bevorzugt mindestens 0,6 mm und höchstens 1,2 mm, mehr bevorzugt höchstens 1,0 mm, noch mehr bevorzugt höchstens 0,8 mm und am meisten bevorzugt höchstens 0,7 mm aufweist.

8. Aerosolerzeugungsvorrichtung (100) nach einem der vorhergehenden Ansprüche, wobei die Aerogelschicht (311) eine Biegefestigkeit von mindestens 0,025 MPa, vorzugsweise mindestens 0,05 MPa, mehr bevorzugt mindestens 0,1 MPa, am meisten bevorzugt mindestens 0,15 MPa und höchstens 0,45 MPa, mehr bevorzugt höchstens 0,4 MPa, noch mehr bevorzugt höchstens 0,3 MPa und am meisten bevorzugt höchstens 0,25 MPa aufweist.

9. Aerosolerzeugungsvorrichtung (100) nach einem der vorhergehenden Ansprüche, wobei das Aerogelmaterial (311) eine Wärmeleitfähigkeit von mindestens 0,010 W/mK, vorzugsweise mindestens 0,011 W/mK, mehr bevorzugt mindestens 0,012 W/mK, am meisten bevorzugt mindestens 0,013 W/mK und höchstens 0,017 W/mK, mehr bevorzugt höchstens 0,016 W/mK, noch mehr bevorzugt höchstens 0,015 W/mK und am meisten bevorzugt höchstens 0,014 W/mK aufweist.

10. Aerosolerzeugungsvorrichtung (100) nach einem der vorhergehenden Ansprüche, wobei das Aerogelmaterial (311) eine Durchlässigkeit für sichtbares Licht von mindestens 92 % bei 800 nm, vorzugsweise mindestens 93 % bei 800 nm, mehr bevorzugt mindestens 94 % bei 800 nm, am meisten bevorzugt mindestens 95 % bei 800 nm und höchstens 99 % bei 800 nm, mehr bevorzugt höchstens 98 % bei 800 nm, noch mehr bevorzugt höchstens 97 % bei 800 nm und am meisten bevorzugt höchstens 96 % bei 800 nm aufweist.

11. Aerosolerzeugungsvorrichtung (100) nach einem der vorhergehenden Ansprüche, wobei das Aerogelmaterial (311) einen Wasserkontaktwinkel mit Superwasserabweisung von mindestens 125°, vorzugsweise mindestens 130°, mehr bevorzugt mindestens 135°, am meisten bevorzugt mindestens 140° und höchstens 160°, mehr bevorzugt höchstens 155°, noch mehr bevorzugt höchstens 150° und am meisten bevorzugt höchstens 145° aufweist.

12. Aerosolerzeugungsvorrichtung (100) nach einem der vorhergehenden Ansprüche, wobei das Vorrichtungsgehäuse (200, 300) einen Hauptkörper (200) und ein Abdeckelement (300), das lösbar an dem Hauptkörper (200) befestigt oder damit verbunden ist, umfasst und das Abdeckelement (300) das Aerogelmaterial (311) umfasst.

13. Aerosolerzeugungsvorrichtung (100) nach dem vorhergehenden Anspruch, wobei das Abdeckelement (300) eine Krümmung aufweist, so dass, wenn die Vorrichtung in Verwendung ist, die Wärme von der Heizeinheit (110) in mehrere Richtungen abgeleitet werden kann.

14. Herstellungsverfahren eines Vorrichtungsgehäuses (300) für eine Aerosolerzeugungsvorrichtung (100) nach einem der vorhergehenden Ansprüche 1 bis 13, umfassend eine Heizeinheit (110) zum Erwärmen eines Aerosolerzeugungssubstrats (120) zum Erzeugen eines Aerosols, wobei das Verfahren den folgenden Schritt umfasst:
- Befestigen der Aerogelschicht (311) an einer Kunststoffschicht (310, 312) durch Kleben, In-Mould-Decoration oder Out-Mould-Decoration; oder
- Befestigen der Aerogelschicht (311) zwischen zwei Kunststoffschichten mit männlicher-weiblicher Passung.

15. Herstellungsverfahren nach dem vorhergehenden Anspruch, wobei eine Oberfläche der Aerogelschicht (311) vollständig an einer Oberfläche der Kunststoffschicht (310, 312) befestigt ist.

## Revendications

1. Un dispositif de génération d'aérosol (100) comprenant :
- une unité chauffante (110) pour chauffer un substrat de génération d'aérosol (120) pour générer un aérosol ; et
- un boîtier de dispositif (200, 300) qui forme au moins une partie de la surface extérieure du dispositif de génération d'aérosol (100) ;
- dans lequel le boîtier de dispositif (200, 300) comprend une couche de matière plastique (310, 312) agencée en tant que couche la plus extérieure du dispositif, et une couche d'aérogel (311) qui comprend et/ou qui est constituée d'un matériau d'aérogel (311), configurée pour isoler l'unité chauffante (110) et dissiper la chaleur générée par l'unité chauffante (110), un côté de la couche d'aérogel (311) étant agencé pour être directement fixé sur la couche de matière plastique (310, 312).

2. Le dispositif de génération d'aérosol (100) selon la revendication précédente, dans lequel le matériau d'aérogel a une densité de 0,10 à 0,15 g/cm³, de préférence de 0,11 à 0,12 g/cm³.

3. Le dispositif de génération d'aérosol (100) selon l'une des revendications précédentes, dans lequel la couche d'aérogel (311) a la forme d'une feuille ou d'un film.

4. Le dispositif de génération d'aérosol (100) selon l'une des revendications précédentes, dans lequel le boîtier de dispositif (200, 300) comprend une autre couche de matière plastique (310, 312) agencée pour être directement fixée sur un autre côté de la couche d'aérogel (311) d'une manière telle que la couche d'aérogel (311) soit prise en sandwich entre les deux couches de matière plastique.

5. Le dispositif de génération d'aérosol (100) selon la revendication précédente, dans lequel la couche de matière plastique est une matière plastique transparente (312) et l'autre couche (312) de matière plastique est une matière plastique non transparente.

6. Le dispositif de génération d'aérosol (100) selon l'une des revendications précédentes, dans lequel une des surfaces de la couche d'aérogel (311) est complètement fixée à une surface de la couche de matière plastique (310, 312).

7. Le dispositif de génération d'aérosol (100) selon l'une des revendications précédentes, dans lequel la couche d'aérogel (311) a une épaisseur moyenne (A) d'au moins 0,2 mm, de préférence d'au moins 0,4 mm, plus préférentiellement d'au moins 0,5 mm, le plus préférentiellement d'au moins 0,6 mm, et d'au plus 1,2 mm, plus préférentiellement d'au plus 1,0 mm, encore plus préférentiellement d'au plus 0,8 mm, et le plus préférentiellement d'au plus 0,7 mm.

8. Le dispositif de génération d'aérosol (100) selon l'une des revendications précédentes, dans lequel la couche d'aérogel (311) présente une rigidité à la courbure d'au moins 0,025 MPa, préférentiellement d'au moins 0,05 MPa, plus préférentiellement d'au moins 0,1 MPa, le plus préférentiellement d'au moins 0,15 MPa, et d'au plus 0,45 MPa, plus préférentiellement d'au plus 0,4 MPa, encore plus préférentiellement d'au plus 0,3 MPa, et le plus préférentiellement d'au plus 0,25 MPa.

9. Le dispositif de génération d'aérosol (100) selon l'une des revendications précédentes, dans lequel le matériau d'aérogel (311) a une conductivité thermique d'au moins 0,010 W/m.K, de préférence d'au moins 0,011 W/m.K, plus préférentiellement d'au moins 0,012 W/m.K, le plus préférentiellement d'au moins 0,013 W/m.K, et d'au plus 0,017 W/m.K, plus préférentiellement d'au plus 0,016 W/m.K, encore plus préférentiellement d'au plus 0,015 W/m.K, et le plus préférentiellement d'au plus 0,014 W/m.K.

10. Le dispositif de génération d'aérosol (100) selon l'une des revendications précédentes, dans lequel le matériau d'aérogel (311) a une transmission de la lumière visible d'au moins 92 % à 800 nm, préférentiellement d'au moins 93 % à 800 nm, plus préférentiellement d'au moins 94 % à 800 nm, le plus préférentiellement d'au moins 95 % à 800 nm, et d'au plus 99 % à 800 nm, plus préférentiellement d'au plus 98 % à 800 nm, encore plus préférentiellement d'au plus 97 % à 800 nm, et le plus préférentiellement d'au plus 96 % à 800 nm.

11. Le dispositif de génération d'aérosol (100) selon l'une des revendications précédentes, dans lequel le matériau d'aérogel (311) a un angle de contact avec l'eau avec super répulsion de l'eau d'au moins 125°, préférentiellement d'au moins 130°, plus préférentiellement d'au moins 135°, le plus préférentiellement d'au moins 140°, et d'au plus 160°, préférentiellement d'au plus 155°, encore plus préférentiellement d'au plus 150°, et le plus préférentiellement d'au plus 145°.

12. Le dispositif de génération d'aérosol (100) selon l'une des revendications précédentes, dans lequel le boîtier de dispositif (200, 300) comprend un corps principal (200) et un élément de couvercle (300) qui est fixé ou relié de manière détachable au corps principal (200), et où l'élément de couvercle (300) inclut le matériau d'aérogel (311).

13. Le dispositif de génération d'aérosol (100) selon la revendication précédente, dans lequel l'élément de couvercle (300) possède une courbure telle que, lorsque le dispositif est utilisé, la chaleur provenant de l'unité chauffante (110) puisse être dissipée dans des directions multiples.

14. Un procédé de fabrication d'un boîtier de dispositif (300) pour un dispositif de génération d'aérosol (100) selon l'une des revendications 1 à 13 précédentes comprenant une unité chauffante (110) pour chauffer un substrat de génération d'aérosol (120) afin de générer une couche d'aérosol, le procédé comprenant l'étape de :
- fixation de la couche d'aérogel (311) à une couche de matière plastique (310, 312) par collage, décoration en moule, ou décoration hors moule ; ou
- fixation de la couche d'aérogel (311) entre deux couches de matière plastique avec emboitement mâle-femelle.

15. Le procédé de fabrication selon la revendication précédente, dans lequel une des surfaces de la couche d'aérogel (311) est complètement fixée à une surface de la couche de matière plastique (310, 312).
